# EUROPEAN PATENT APPLICATION

(11) **EP 1 477 894 A2**
(43) Date of publication of application: **17.11.2004**
(21) Application number: 03078294.0
(22) Date of filing: 17.10.2003
(51) Int. Cl.: G06F 9/44

(54) **System, method, computer program product and article of manufacture for manipulating a graphical user interface**

(30) Priority: 16.05.2003 EP 03011000
(71) Applicant: SAP AG, 69190 Walldorf (DE)
(72) Inventor: Hatscher, Michael, 49080 Osnabrück (DE); Beringer, Joerg, 60431 Frankfurt (DE); Lee, Chinhao, Mountain View, CA 94040 (US); Wood, Eric, Menlo Park, CA 94025 (US)
(74) Representative: Prins, Adrianus Willem, Mr. Ir.

(57) **Abstract**

A computer system (1), comprising an graphical user-interface (200), the user-interface comprising:
an item interface (110) in which at least two items can be listed, which item interface (110) in a expanded state has a collapse control (112) for bringing the item interface (110) in a collapsed state in which the dimensions of the item interface (110) are partially reduced and at least some of the items are not visible and which item interface (110) in a collapsed state has a expand control (113)for bringing the item interface (110) in the expanded state.

## Description

The invention relates to a computer system, a method for manipulating an item interface, a computer program product and an article of manufacture.

In the art, computer systems are known which have an a user-interface which comprises a display. The user-interface comprises a graphical user-interface (GUI), which has a graphical program interface, in which a window showing a list of items is present. The list of items may represent a sequence of steps to be performed by a user or may be a list of files and folders present in the computer system, for example. In the prior art system, the list of items are presented in a tree-shaped manner. The leaves of the tree can be collapsed or expanded to change the occupied area via suitable tree controls. The prior art system further has a close control by means of which the window can be closed and thus be removed from the user-interface. The window can be re-opened via suitable controls and be shown in the user-interface again. Thus, the amount of GUI area occupied by the list of items can be reduced, to release space in which, for example, other information can be presented.

However, a draw-back of this prior art computer system is that if the leaves of the tree are collapsed or expanded, the size of the window remains the same, and thus the amount of GUI space occupied by the windows is not reduced. Furthermore, if the window is removed, the window is not visible anymore. This is confusing to the user of the computer system.

Another drawback of the prior art computer system is that re-opening of the window is a complex operation. Re-opening can be performed in several manners. In one manner of re-opening the window, the user first has to select by means of a mouse or other input device, an item in a menu present at the GUI. In response to this selection, a sub-menu is opened, which is associated with the selected item in the menu. The sub-menu has a suitable control to re-open the window. This requires the user to remember in which item has to be selected to reveal the submenu. The window may also be re-opened by pressing a certain combination of keyboard keys. However, this requires the user to memorise the specific combination.

It is a general goal of the invention to overcome at least a part of the above mentioned disadvantages. It is a more specific goal of the invention to provide a computer system with an increased ease of use. The invention therefore provides a computer system according to claim 1.

The item interface can be collapsed via the collapse control. In the collapsed state, the dimensions of the item interface are reduced partially. Thus, the item interface is still present in the user-interface and can be noticed by the user, while the amount of GUI area occupied by the item interface is reduced. The user is therefore not confused by the total absence of the item interface in the user-interface. Furthermore, the user can easily bring the collapsed item interface into the expanded state via the expand control. Thus, the user does not have to follow a complex procedure to bring the item interface into the expanded state or to memorise the specifics steps of the complex procedure. The computer system therefore has an increased ease of use.

The invention further provides a method according to claim 12. The invention also provides a computer program product according to claim 13 and an article of manufacture according to claim 14.

Specific embodiments of the invention are set forth in the dependent claims. Further details, aspects and embodiments of the invention will be described below, by way of example only, with reference to the figures in the attached drawings.
Fig. 1 schematically shows an example of an embodiment of a computer system according to the invention.
Figs. 2 schematically shows a first example of a GUI suitable for use in an embodiment of a computer system according to the invention, with an item interface in an expanded state.
Figs. 3 schematically shows the first example of a GUI, with the item interface in a collapsed state.
Figs. 4 schematically shows a second example of a GUI suitable for use in an embodiment of a computer system according to the invention, with an item interface in a collapsed state.
Figs. 5 schematically shows a third example of a GUI suitable for use in an embodiment of a computer system according to the invention, with an item interface in an expanded state.
Figs. 6 schematically shows the third example of a GUI, with the item interface in a collapsed state.
Figs. 7a-b schematically show an interface in a collapsed state and an expanded state.

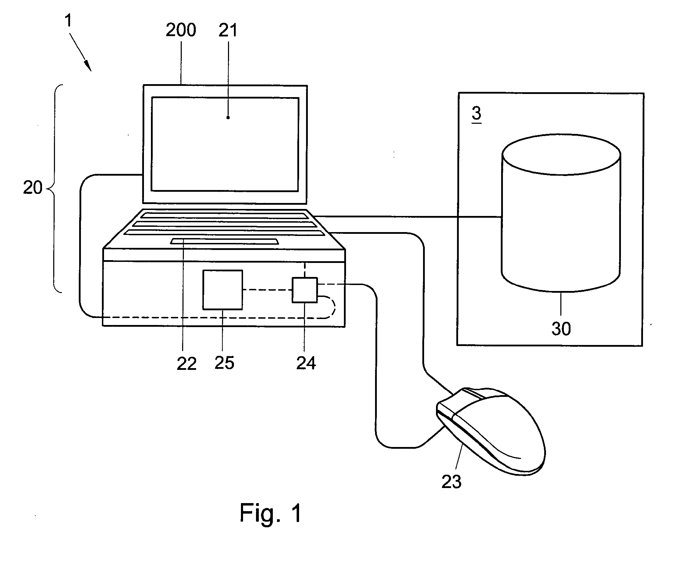

Fig. 1 shows an example of a computer system 1 which comprises a computer device 2. The computer system 1 further comprises a server system 3 with a database 30 In the example of fig. 1, the computer device 2 is communicatively connected to the server system 3 and the database 30 therein. The computer system may likewise be a stand-alone system and/or be connected to other resources than the database. For instance, the database 30 may be a part of the computer device 2 and be positioned inside the computer device 2 instead of the server system 3 or the computer device 2 may be connected to a computerised enterprise management system, such as is sold by SAP AG of Walldorf, Germany.

The example of a computer device 2 is provided with a user-interface (UI) 20. The user-interface 20 comprises an input interface at which the user can input data into the computer device 2, e.g. by means of a keyboard 22 and a mouse 23. The computer device 2 further comprises an output interface at which data can be outputted in a for humans perceptible form to a user. In this example, the output interface comprises a monitor 21 by means of which data can be outputted visually in a graphical user interface 200.

Both the output interface and the input interface may comprise other components than those depicted in figure 1, such as an electronic writing pad, acoustic output or input devices or otherwise. Furthermore the input and output interface may at least partially be integrated in the same device, such as in a touch screen or otherwise.

In the example computer system of fig. 1, actions performed by a user by means of the keyboard 22 and mouse 23 are graphically represented at the GUI 200 by the computer system 1. Thus, in this example, when actions are said to be performed by an user at the GUI 200, the actions are performed by means of the keyboard 22 and mouse 23, but graphically represented at the GUI 200. However, it is likewise possible to combine the GUI 200 and the input interface, for example in a touch-screen or otherwise. In such a combined GUI and input interface, actions said to be performed by an user at the GUI are both represented and performed at the GUI.

The computer system 2 in the example shown in fig. 1 further comprises a processor 24 which is communicatively connected to the monitor 21, the keyboard 22, the mouse 23 and a memory 25, as is indicated with the lines in fig. 1. The processor 24 is, inter alia, arranged to handle input from the input interface, and to provide the monitor 21 with data which is to outputted at the GUI 200. The processor 24 may be arranged to perform other operations as well, such as routing received or outputted data to other devices, manipulating data or otherwise.

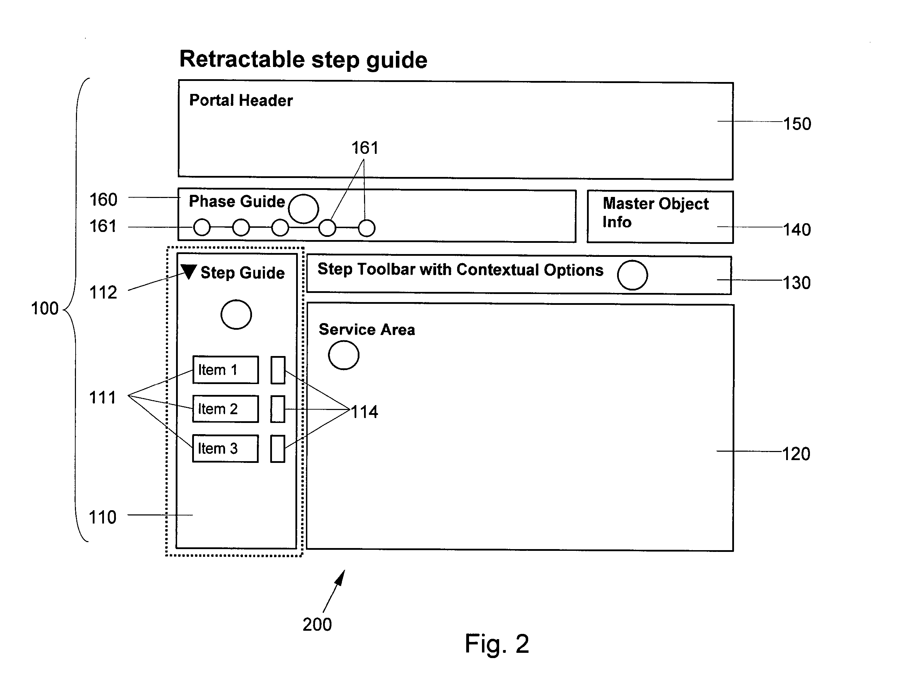

A computer program may be run on the computer system 1. When the computer program is running on the computer system 1, the processor 24 performs instructions according to program code stored in the memory 25. The computer program may, for example, be a program for storing, categorising and/or ordering items in the database 30 or may, for example, be a web-browser program which allows access to resources, such as applications, data and services of a computerised enterprise management system, such as is sold by SAP AG of Walldorf, Germany or otherwise. In the example of figs 2-6, the computer program is a program which guides an user through a procedure of steps using resources present in the server system 3 and/or the computer device 2 and/or other apparatuses connected to the computer device 2, such as the database 30 for instance. The procedure may for example a number of actions to be taken by the user to achieve a certain goal, steps to be performed by the computer device 2 under control of an operator, or otherwise. An example of such a program is known from the United States provisional patent application filed by the applicant titled Guided Procedures, incorporated herein by reference

As for example shown in figs. 2-3, a graphical program interface 100 is shown in the GUI 200 when the computer program is running. The graphical program interface 100 is a graphical representation of (a part of) the computer program running on the computer system 2. In the examples of figs. 2-6, the graphical program interface 100 occupies the whole area of the GUI 200. However, the graphical program interface 100 may likewise occupy a part of the GUI 200 only and other interfaces (for example from other computer programs running simultaneously) may likewise be present in the GUI 200.

In the examples of figs. 2-6, the graphical program interface 100 comprises several sub-interfaces, such as a service area 120, a contextual interface 130, a master object info window 140, a phase guide interface 160 and a portal header 150, which sub-interfaces will be explained below in further detail. In the portal header 150. general information can be provided, as well as controls, for example, by means of which select a certain procedure to be performed. In the master object info window 140 information about the selected procedure is shown, such as the name of the procedure and the person or computer performing the procedure.

The graphical program interface 100 further comprises an item interface 110, the "step guide", in which a list of items 111 ('item1', 'item2' and 'item3') is shown. In this example, the items represent steps to be performed by the user or the computer system. The steps shown in the item interface 110 are associated with one or more selected items in another interface, in this example a selected one of phase items 161 shown in the phase guide interface 160. However, the items 111 may represent something else and/or not be associated with items in another (sub-)interface.

In the example of fig. 2-4, the item interface 110 is provided with event controls by means of which performance of steps can be initiated which are associated with one or more of the items. In this example, the event controls are implemented as hyperlinks by means of which displaying specific information associated with a selected item in the service area 120 can be initiated. However, other steps associated with an item may likewise be initiated by means of the event controls, such as running a computer program associated with the item or displaying further steps to be performed by the user which are associated with the item. The item interface 110 is further provided with check boxes 114 by means of which the user can indicate which steps have been performed. In response to checking a box 114 associated with an item, the computer system may automatically select a next step to be performed. For instance in the example of fig. 2, if the items 'item1', 'item2' and 'item3' represent successive steps, when the box near 'item1' is checked, 'item2' is selected automatically as the active step.

In the example of figs. 2-3, the item 'item 2' is selected in the expanded state. In the collapsed state this selected item is displayed in the item interface 110 with reduced dimensions, while the not selected items are not visible in the collapsed state. Thus, the user can perceive in the collapsed state which item(s) are selected in the item interface 110.An example of such a "step guide" is known from the European patent application 03011000.1 of May 16, 2003, which is incorporated herein by reference.

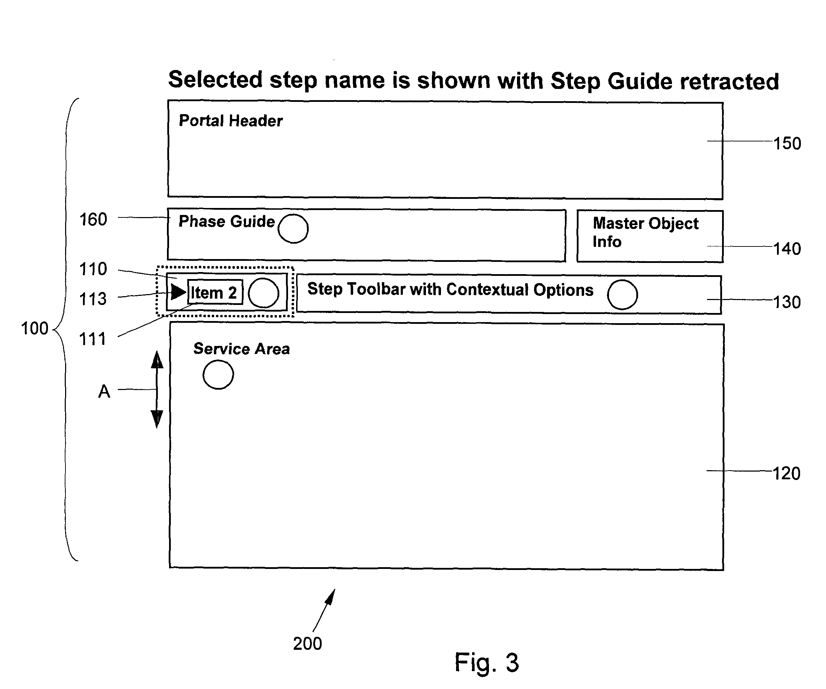

The item interface 110 is provided with a collapse control 112 by means of which dimensions of the item interface can be reduced partially. The item interface 111 can be brought from an expanded state (shown in fig. 2) into a collapsed state (shown in fig. 3) by means of the control 112. The collapse control 112 may for example be a button which can be pressed by the user by means of the mouse 23, as shown in the examples of figs. 2-7. However, the control may likewise be implemented differently and be activated in response to another action at the GUI, such as change of dimensions of another (sub)interface at the GUI. As shown in fig. 3, after pressing the button the item interface is in the collapsed state and more space is available in the user-interface 20 to other parts of the graphical program interface 100. In the example of fig. 3, for instance, the service area 120 has occupied the space which is provided by bringing the item interface 110 from the expanded state into the collapsed state. As shown in figs. 3-4, in the collapsed state the item interface 110 has an expand control 113 by means of which the item interface 110 can be brought back into the expanded state.

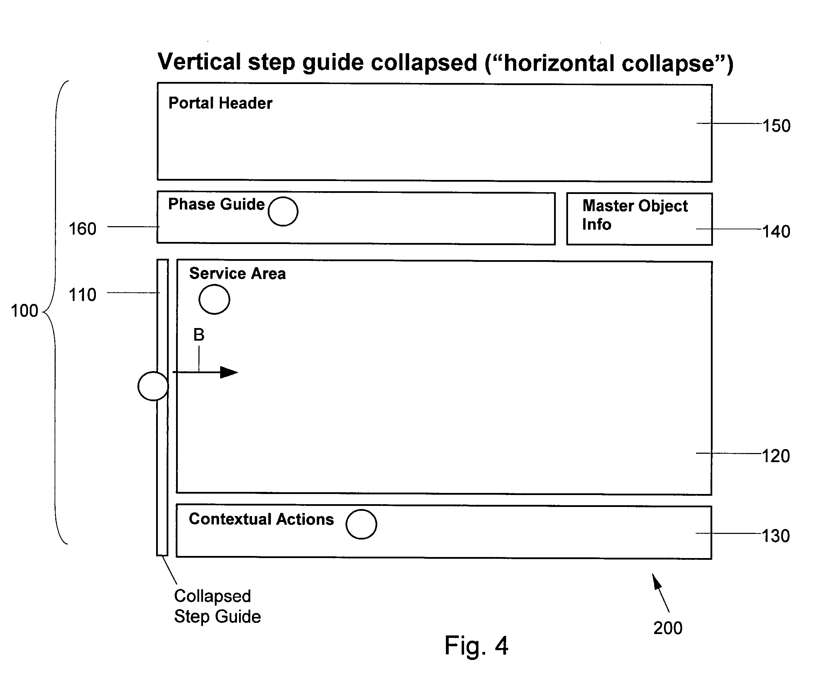

In the examples of figs. 2 and 3, in the collapsed state the vertical dimensions of the item interface 110 are reduced only, as is indicated with the arrow A. In the example of fig. 4, only the horizontal dimensions of the item interface 110 are reduced in the collapsed state compared to the expanded state, as is indicated with the arrow B. It is found that a collapse and/or expansion in one dimension only, i.e. either horizontal or vertical, is convenient to a user.

In the examples of figs. 2-4, only one side, referred to as the movable side of the interface, is moved, when the item interface is brought from the expanded state into the collapsed state or vice versa. Thus, the movable side lies closer to the fixed side in the collapsed state than in the expanded state. In figs. 2-3, the side which may be seen as the bottom of the interface is displaced vertically towards the top of the item interface 110. In fig. 4, the right hand side is moved towards the left hand side of the item interface 110. It is found that it is convenient to the user of the computer device 2 when only one part of the interface is moving during a transition from the expanded state to the collapsed state or vice versa, because this does not affect the orientation of the user at the GUI.

As is shown in figs. 3 and 4, at least a part of the items 111 is not visible anymore in the collapsed state. In fig. 3, one item 111 is still visible in the collapsed state. The visible item may for example be an item selected by the user in the expanded state or an item which is active in the collapsed state. One or more visible items in the collapsed state provide an increased ease of use, because the user can perceive relevant information, i.e. the items and / or their status, even in the collapsed state.

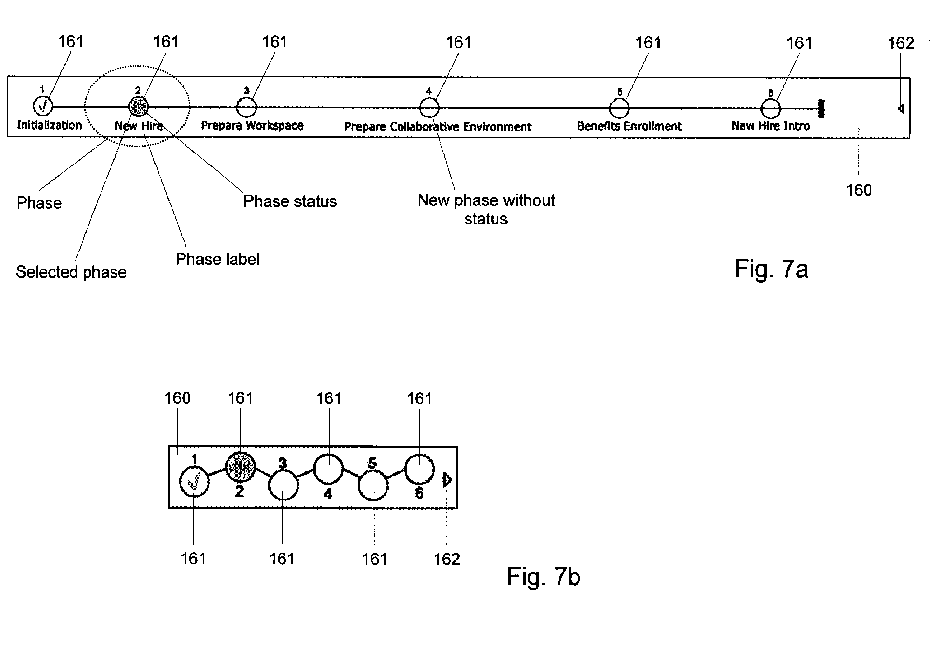

In the example of fig. 7a-7b, all items present in the expanded state remain visible in the collapsed state, but the items are positioned closer to each other in the collapsed state and additional information shown in the expanded state is not shown in the collapsed state. Thus, the user is presented as much information in the collapsed state as in the expanded state, while the amount of space occupied by the interface is reduced.

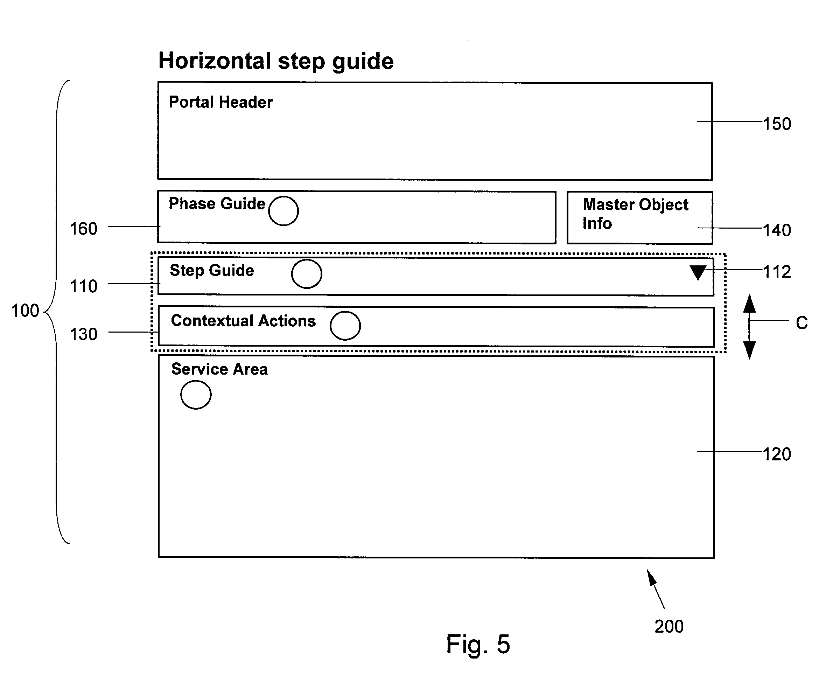

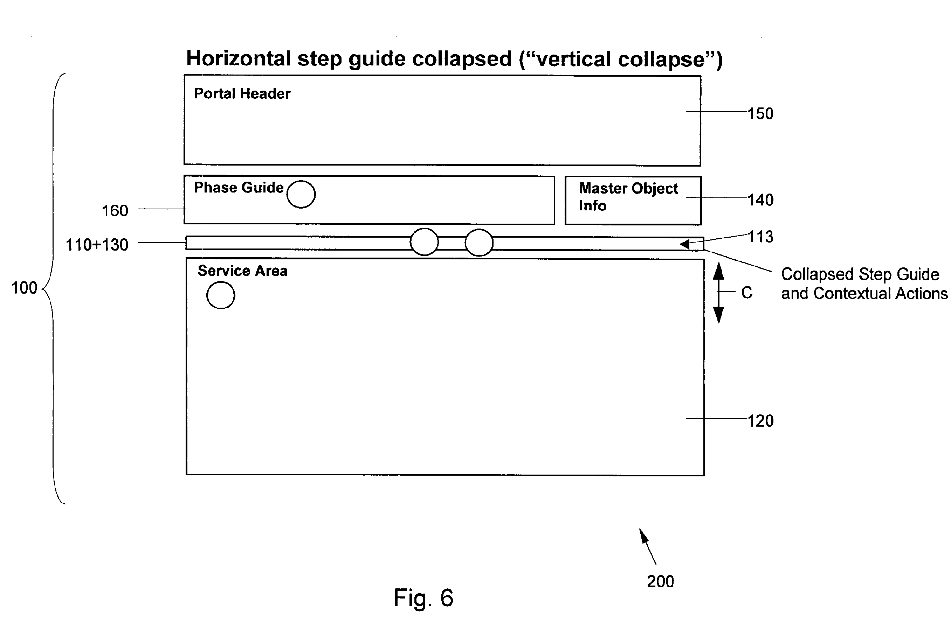

As illustrated in figs. 5-6, in which the collapsed state is shown in fig. 6 and the expanded state is shown in fig. 5, the dimensions of other interfaces may be coupled to those of the item interface 110. For example, other interfaces may also be reduced when the item interface 110 is brought into the collapsed state. In the example of figs. 5-6, the combined dimensions of the item interface 110 and the contextual interface 130 are reduced in the collapsed state compared to the expanded state, and the contextual interface 130 is hidden entirely in the collapsed state. In the contextual interface 130, controls and information related to a selected item 111 are shown. For example, a description of the item can be shown, controls to save or edit the list of items or otherwise. Thus, when the item interface 110 is not required and can be collapsed, the contextual interface is not required and can be collapsed as well. Thereby, the amount of space cleared by the collapse is increased and information not needed in this situation is hidden, thus reducing the amount of complexity and increasing the ease of use.

The size of one or more of the other interfaces may also be increased in response to collapsing the item interface 110, for example in order to occupy the area released by the collapsed interface. In the examples of figs. 3 and 6 for instance, the size of service area 120 is increased in the collapsed state by the area formerly taken up by the collapsed interface compared to the expanded state. In the service area 120, applications and other resources associated with the selected item of the list are displayed, in order to assist the user. For example, when the items represent steps to be performed, in the service area applications and data useful in performing the step can be shown, such as for example available resources, addresses or otherwise. By increasing the service area dimensions when the item interface 110 collapses, more information can be presented in the service area 120.

In the examples of figs. 2-6, the item interface is provided with a collapse control. However, other sub-interfaces in the graphical program interface 100 may also be provided with a collapse and/or expand control. For example, in figs. 7a-7b, a phase guide interface 160 suitable for the examples of figs. 2-6 is shown, which is provided with a collapse and expand control 162.

In the phase guide 160, box-shaped phase items 161 are shown which represent certain phases in the procedure to be performed. In fig. 7a, the phases: initialization, new hire, prepare workspace, prepare collaborative environment, benefits enrolment and new hire intro are shown. The user can select a phase item. In response to this selection, the steps to be performed in the selected phase are shown automatically as a list in the item interface 110. The status of the phase is shown in the phase guide interface 160. When all steps associated with a phase have been performed, the box for phase item 161 is checked to indicate that this phase is finished, as shown in figs. 7a-7b for the phase item 'initialization'. The active phase item, i.e. the phase which steps are being performed, is marked, in this example with an exclamation mark. In fig. 7a the active phase item is 'new hire'.

In fig. 7a, the phase guide interface 160 is shown in the expanded state. As is indicated with reference number 162, the phase guide interface 160 has a collapse and expand control 162 by means of which the phase guide can be expanded and collapsed in a horizontal direction. In fig. 7b, the phase guide 160 is shown in a collapsed state.

In the expanded state, additional information, e.g. the phase name, is shown below the respective phase item 161. In the collapsed state, all the items 161 shown in the expanded state are still visible in the phase guide interface 160, but the items 161are positioned closer to each other than in the expanded state. Furthermore, when the phase guide interface 160 is brought into the collapsed state via the collapse and expand control 162, the additional information is hidden. A user can therefore still see all phases in the collapsed state and be informed about the states of the different phases.

In the examples of figs. 2-3 and 7a-7b, the collapse control 112 and the expand control 113 also act as a status indicator which indicates the state in which the respective interface is in. In figs. 2-3 the status indicator is implemented as a triangle-shaped button which points downwards in the expanded state and points horizontally in the collapsed state. In figs. 7a-7b, the status indicator is a triangle-shaped button which points in the direction to which the dimensions of the phase guide interface 160 will be reduced when brought in another state.

The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

The invention may also be implemented in an article of manufacture with a computer usable medium having computer readable instructions embodied therein for providing access to resources available on that computer, the computer readable instructions comprising instructions to cause the computer to perform the steps of a method according to the invention. The invention may also be implemented as a computer program for running on a computer system, at least including code portions for performing steps of a method according to the invention when run on a computer system or enabling a general propose computer system to perform functions of a filter device according to the invention. Such a computer program may be provided on a data carrier, such as a CD-ROM or diskette, stored with data loadable in a memory of a computer system, the data representing the computer program. The data carrier may further be a data connection, such as a telephone cable or a wireless connection transmitting signals representing a computer program according to the invention.

It should be noted that the above-mentioned embodiments illustrate rather than limit the invention, and that those skilled in the art will be able to design alternatives without departing from the scope of the appended claims. For example, in fig. 1 the database 30 is depicted outside the computer device 2, but the database may likewise be present inside the computer device. Also, the computer device 2 and/or the database 30 may be connected to other devices or systems. Furthermore, the computer system may be any device suitable, such as for example a general purpose computer, a personal digital assistant or otherwise. In the claims, any reference signs placed between parentheses shall not be construed as limiting the claim. The word 'comprising' does not exclude the presence of other elements or steps than those listed in a claim. The mere fact that certain measures are recited in mutually different claims does not indicate that a combination of these measures cannot be used to advantage.

## Claims

1. A computer system (1) comprising a graphical user-interface (200), the graphical user-interface (200) comprising:
an item interface (110) in which at least two items (111,161) can be listed,
which item interface (110) in a expanded state has a collapse control (112) for bringing the item interface (110) in a collapsed state in which the dimensions of the item interface (110) are partially reduced with respect to the expanded state and at least some of the items are not visible, and
which item interface (110) in a collapsed state has a expand control (113)for bringing the item interface (110) in the expanded state.

2. A computer system (1) as claimed in claim 1, wherein in the collapsed state the vertical dimensions of the item interface (110) are reduced compared to the expanded state.

3. A computer system (1) as claimed in claim 1, wherein in the collapsed state the horizontal dimensions of the item interface (110) are reduced compared to the expanded state.

4. A computer system (1) as claimed in claim 2 or 3, wherein item interface (110) has:
a fixed side which has the same position in the expanded state and the collapsed state;
and a movable side substantially parallel to the fixed side,
which movable side lies closer to the fixed side in the collapsed state than in the expanded state.

5. A computer system (1) as claimed in claim 1, 2 or 3, wherein the item interface (110) has at least one select control (114) for selecting at least one of said at least two items (111,161), and wherein in the collapsed state at least one selected item is visible in the item interface (110) and not selected items which are not visible in the collapsed state

6. A computer system (1) as claimed in any one of the preceding claims, wherein the item interface (110) comprises at least one event control for initiating performing, at least partially by the computer system (1), steps associated with at least one of the listed items.

7. A computer system (1) as claimed in claim 5, wherein changes at the user interface can be initiated via said event controls, such as for example displaying in another interface (120,130,140,150,160) within the user-interface (200) information associated with at least one of the listed items (111,161).

8. A computer system (1) as claimed in any one of the preceding claims, wherein said collapse control (112) is further arranged for increasing or decreasing at least one dimension of another interface (120), such as for occupying, by the other interface, in the collapsed state an area occupied by the item interface (110) in the expanded state.

9. A computer system (1) as claimed in any one of the preceding claims, wherein the item interface (110) has a state indicator (113) which depicts whether the item interface (110) is in the collapsed state or the expanded state.

10. A computer system (1) as claimed in any one of the preceding claims, wherein in said collapsed state, at least two of the items (161) are visible and positioned closer to each other than in the expanded state.

11. A computer system (1) as claimed in claim 10, wherein a horizontal space between said least two of the items (161) is smaller in the collapsed state than in the expanded state.

12. A method for manipulating an item interface (110) in a user-interface of a computer system (1), in which item interface (110) at least two items (111,161) can be listed, the method comprising:
in an expanded state of the item interface (110): reducing the dimensions of the item interface (110) and thereby bringing the item interface (110) in a collapsed state in which the dimensions of the item interface (110) are partially reduced and at least some of the items are not visible; and
in the collapsed state: increasing the dimensions of the item interface (110) and thereby bringing the item interface (110) into the expanded state.

13. A computer program product, comprising program code portions for performing steps of a method as claimed in claim 12 when run on a programmable apparatus.

14. An article of manufacture with a computer usable medium having computer readable instructions embodied therein for providing access to resources available on that computer, the computer readable instructions comprising instructions to cause the computer to perform the steps of a method as claimed in claim 12.
